# EUROPEAN PATENT APPLICATION

(11) **EP 2 816 273 A1**
(43) Date of publication of application: **24.12.2014**
(21) Application number: 13172713.3
(22) Date of filing: 19.06.2013
(51) Int. Cl.: F16L 37/54

(54) **Pipe joint comprising a combi-cross hinge assembly**

(71) Applicant: AVK Holding A/S, 8464 Galten (DK)
(72) Inventor: Freudendahl, Erling Arnum, 8464 Galten (DK)
(74) Representative: Chas. Hude A/S

(57) **Abstract**

A pipe joint (1) comprising a first section (2) of a first pipe (3) and a second section (4) of a second pipe (5), said second section (4) comprising an end (6) having an inner diameter approximately equal to the outer diameter of the first section (2), said first section (2) being inserted into the second section (4), and when the two pipes are coupled to each other, said pipe joint (1) comprises a pipe coupling (7) for coupling the two pipe sections (2, 4) to each other, wherein the pipe coupling (1) comprises a hinge (8) comprising a first part (29) placed at one pipe and an attachment part (10) placed at the other pipe, said pipe joint (1) further comprising fastening means (11) for fastening the two pipes (3, 5) to each other.

## Description

### Technical Field

The invention relates to a pipe joint comprising a first section of a first pipe and a second section of a second pipe, said second section comprising an end having an inner diameter approximately equal to the outer diameter of the first section, said first section being inserted into the second section, and when the two pipes are coupled to each other, said pipe joint comprises a pipe coupling for coupling the two pipe sections to each other.

### Background

Pipe joints are known in many different constructions, eg pipe joints using a flange placed at two pipes to be joined and using bolts for tightening the two flanges fluidtightly to each other.

DE 1020 11106620 discloses such a pipe joint. The connection has a flange section provided in an outlet pipe and another flange section provided in an inlet pipe. A clamp is used for pressing the flanges together in an axial direction. The pipes are brought together into a prefixing position and are supported in a radial direction. A locking element is utilised for detachably locking the inlet and outlet pipes together in the prefixing position in the axial direction.

In order to function, the construction requires that the flanges placed at each pipe end mate with each other precisely. The connection is not flexible and does not provide the opportunity to angle the two pipes in relation to each other; they have to be coaxially connected. Further, the joining of the two ends requires a precise management which can be difficult when the pipes are parts of heavy components such as gate valves and combi-cross systems.

### Disclosure of the Invention

An aspect of the invention is to provide a new pipe joint overcoming at least one of the disadvantages of the prior art or at least providing a useful alternative.

According to a first aspect of the invention, a pipe joint as described in the introduction is provided, said pipe coupling comprising a hinge comprising a first part placed at one pipe and an attachment part placed at the other pipe, said pipe joint further comprising fastening means for fastening the two pipes to each other.

The connection is especially advantageous when a pipe end belonging to a heavy component such as a gate valve is to be assembled to a combi-cross pipe system.

A combi-cross system comprises a horizontal 3 or 4 tube-assembly radially arising from a centre unit.

These components are very heavy and quite difficult to manage and steer and require a crane or other heavy machinery in order to be handled.

By the claimed construction, a flexible and simple way of joining two pipe ends is achieved. Further, it is possible to regulate the angle between the two pipe ends, whereby it is possible to obtain an angle up to 10 degrees between the longitudinal axes of the joint pipes.

The one pipe section, which may be a part of a heavy gate valve, comprises the first part. Advantageously, a pintle is lifted by a crane in a sling in such a way that it is suspendedly inclined. The pintle is placed at the upper part of the pipe section which is tilted forward due to the slanted suspension. The pipe end is now lowered in such a way that the pintle is caught by the attachment means advantageously comprising a hinged loop comprising an opening, said opening receiving the pintle.

By the joining of the pintle and the hinged loop, the pipe part comprising the pintle is managed into place in a controlled manner by lowering the pipe and introducing one pipe end into the inside of the other pipe end. Thereby, the pipe ends are connected. Then, the attachment means is activated, whereby the two pipe ends are connected to each other in a fluidtight manner. The attachment means may be several locking pins being attached with one end to the first pipe and the second end of the pins being attached to the second pipe.

As described above, the coupling may be a pintle and a hinged loop. However, it may also be a magnetic connection allowing a hinge movement between the two pipe sections during the joining/coupling of the sections.

Preferably, the attachment part may be integrated with and built into the pipe. However, it may also be a detachable part comprising one or several hooks, which are fastened to the pipe in question.

According to another aspect of the invention, the first part comprises a pintle.

This is the simplest way of obtaining a hinge.

According to another aspect of the invention, the first part is placed at the radial outer surface of the second pipe at a second position and that the attachment part is placed at the radial outer surface of the first pipe at a first position, said first and second positions being level with each other when the two pipes are placed with their longitudinal axes being substantially coincident or angled in relation to each other up to 10 degrees when being in a position for joining the two pipes.

Thereby, the two pipes are correctly positioned in relation to each other when they are joined. By the joining, the longitudinal axis of the two pipes forms an angle of 0-10 degrees.

According to another aspect of the invention, the attachment part comprises a hinged loop comprising an opening, said opening being adapted to receive the first part.

Advantageously, the attachment part is placed at the upper part of the pipes in question and quite close to the inlet of the pipe.

According to another aspect of the invention, generally the attachment part is a U-shaped hinge formed integrally with or by other means fixed to the first pipe, the radius of the U-shaped hinge being equal to or larger than the radius of the first part.

This is a simple way of constructing the attachment parts, especially when the first part is a pintle. The attachment parts may be fixed to the pipe by bolts fastening the hook(s)/u-shaped hinge into a recess or it may be an integrated part of the pipe.

According to another aspect of the invention, the longitudinal axis of the pintle is placed perpendicularly in relation to the longitudinal axis of the second pipe.

This ensures an easy handling of the second pipe when it is joined to the first pipe and that the first pipe is not tilted the wrong way.

According to another aspect of the invention, the first part is an integral part of the second pipe.

This makes it a very robust construction.

According to another aspect of the invention, the pintle is a separate part being detachably attached to the second pipe by placing a part of said pintle in a bore provided in the second pipe, and in that the rest of the pintle is adapted to be coupled together with the attachment part.

This makes the first part very flexible and also quite cheap to produce as the pipe and attachment may be produced in an ordinary manner and after construction of the pipe, a bore may be drilled for receiving a pintle.

According to another aspect of the invention, the fastening means comprises a radial outwardly extending integral fish joint, said fish joint comprising a first fishplate placed at the first pipe and a second fishplate placed at the second pipe, said plates each comprising a through-going bore and being connected by a bolt/nut or locking pin inserted into said bores.

This is a simple way of constructing the fastening means and provide a safe attachment.

According to another aspect of the invention, the fastening means and the pipe coupling are radially placed at opposite sides of the outside of the pipes.

By placing the fastening means in relation to the hinge as claimed, it is possible to obtain the largest torque when positioning the two pipes in relation to each other.

According to another aspect of the invention, the fastening means comprises a number of bolts/nuts or locking pins, each bolt/locking pin being placed with the longitudinal axis substantially parallel with the longitudinal axis of the pipes and each bolt/locking pin being placed in a first and second bore, said first bore being placed at the radially outer side of the first pipe and the second bore being placed at the outer surface of the second pipe, said fastening means fastening the two pipes together, said fastening means allowing angular deflection and an adjustment in the longitudinal direction.

By making the fastening means in several pieces, it makes the joining more flexible allowing the two pipes to be angled 0-10 degrees in a 360 degree circumference. Further, it allows a longitudinal adjustment, eg for shortening the length of dismantling from a pipe installation, thereby making the use of a telescopic tube superfluous.

The invention also comprises a method for joining two pipes fluidtightly to each other by a pipe joint comprising a first section of a first pipe and a second section of a second pipe, said second section comprising an end having an inner diameter approximately equal to the outer diameter of the first section, said first section being inserted into the second section, when the two pipes are coupled together, the pipe joint further comprising a pipe coupling for coupling the two pipe sections together, characterised in that the pipe coupling comprises a hinge comprising a first part placed at one pipe,
said first pipe being suspended and placed in a sloped angle and moved downwards, whereby the first part is caught by an attachment part placed at the other pipe,
said first pipe being moved into a substantially horizontal position, said movement being controlled by the hinge,
and in that the pipe joint further comprises fastening means for fastening the two pipes together, said fastening means being activated when the two pipe sections are in a prefixed position, whereby the two sections are fluidtightly joined.

Further, the invention relates to the use of the pipe joint according to the invention in a method as described above.

Furthermore, the invention relates to the use of the pipe joint according to the invention for joining a pipe of a gate valve and a pipe belonging to a combi-cross system to each other

### Brief Description of the Drawing(s)

The invention is explained in detail below with reference to the drawing(s), in which
Fig. 1 shows a vertical sectional view through a gate valve, a combi-cross pipe system and a pipe joint according to the invention,
Fig. 2 shows the pipe joint in Fig. 1 in closed position, a detailed drawing of a collar and a valve stem part according to the invention,
Fig. 3 shows a detailed drawing of a pipe joint according to the invention, and
Fig. 4 shows a detailed drawing of an alternative pipe joint according to the invention.

### Detailed description of the Invention

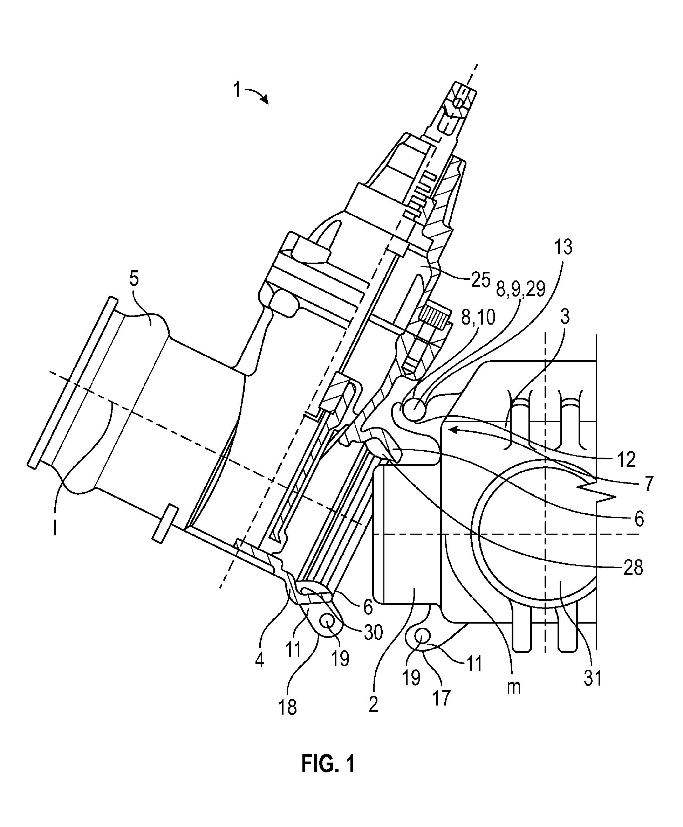

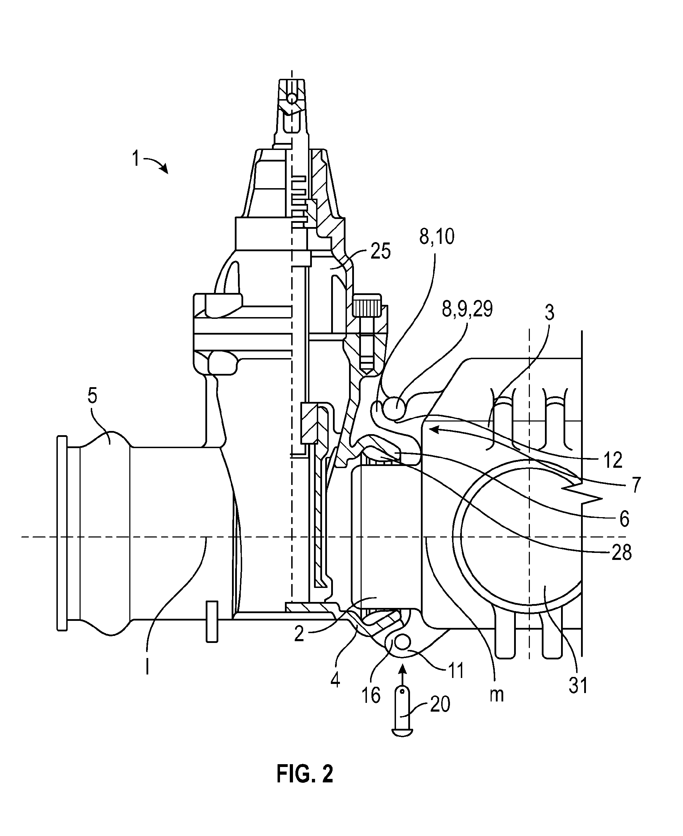

Fig. 1 shows a vertical sectional view through a gate valve 25, a combi-cross pipe system 31 and a pipe joint 1 according to the invention. Fig. 2 shows the same components, but the pipes being joined. The gate valve 25 is placed at a second pipe 5, said second pipe 5 comprising a second section 4 which is the free end of the pipe 5 and a part of the pipe joint 1. The second pipe 5 is circular in cross-section, and the inner diameter of the end of the second pipe 5 press-fits and encloses a free end part - a first section 2 - of a first pipe 3. The first section 2 and the second section 4 are both quite short. When the two pipes are joined, the second pipe section 4 encloses the entire first section 2. The second section 4 is formed with a circumferential recess 30 inside the pipe quite close to the end 6 of the second section 4, said recess being formed by increasing the internal and external diameter of the second section 4. In the recess 30, a seal is placed which helps make the joint fluidtight during the joining of the two pipes.

In a vertical direction a few cm above the inlet of the second pipe section 4, a first part 29 is placed, said first part 29 being a part of a hinge 8 forming a pipe coupling 7 between the two pipes. The first part 29 is formed as a pintle with a cross-sectional area being circular. The longitudinal axis of the pintle is positioned perpendicular to the longitudinal axis I of the second pipe 5. The pintle may be an integrated part of the pipe 5 and is then formed during the forming of the pipe 5. The first part 29 is placed in a welldefined, non-changeable position: a second position.

However, the first part 29 may also be formed by drilling a bore in a flange of the second pipe 5 and then placing a replaceable pintle in said bore. This makes the production of the pipe coupling 7 more flexible and cheaper.

A fastening means 11 is formed at the outside of the second pipe section 4 and opposite from where the first part 29 is placed. The fastening means 11 has the purpose of gathering the two pipes together in a fluidtight manner. It comprises a second fishplate 18 which mates with a first fishplate 17 being an integrated part of the first pipe 3. When assembling the two pipes, the first and the second fishplates 17, 18 are pressed and pulled towards each other, and a thorough-going bore 19 in each fishplate 17, 18 is positioned outside and kept there by placing a locking pin 20 in both bores 19. By this arrangement, an integral fish joint 16 is provided.

The first pipe 3 comprises the first section 2 being the free end part of the first pipe 3. The first pipe is a part of a combi-cross pipe system 31. The first section 2 is a short cylindrical part having a length of a few cm and press-fitting into the second pipe 4 section by a mater/pater arrangement. When the two pipes are joined, the first section 2 is completely enclosed by the second pipe section 4.

In a vertical direction about 5-15 cm above the inlet of the first pipe section 2, an attachment part 10 is placed, this being a part of the hinge 8 that forms the pipe coupling 7 between the two pipes. The attachment part 10 is shaped as a hinged loop 12: it is shaped with a half-cylindrical curvature opened in the direction upwards, ie away from the pipe section 2. The curvature is shaped in such a way that the pintle 9 rests in the curvature when the two pipes are assembled. The attachment part 10 comprises a hinged loop 12 comprising an opening 13, said opening 13 being adapted to receive the first part 29. Generally, the hinged loop 12 is a U-shaped hinge formed integrally with the first pipe 3, said radius of the U-shaped curvature being equal to or larger than the radius of the first part 29.

The attachment part 10 may be an integrated part of the first pipe 3, or it may be a renewable part and the attachment part 10 is placed at the radial outer surface of the first pipe at a first position, said first and second positions being level with each other when the two pipes are coincidentally placed with the longitudinal axis m of the first pipe 2 and the longitudinal axis I of the second pipe 41. The fastening means and the hinge are radially placed at opposite sides of the outside of the pipes.

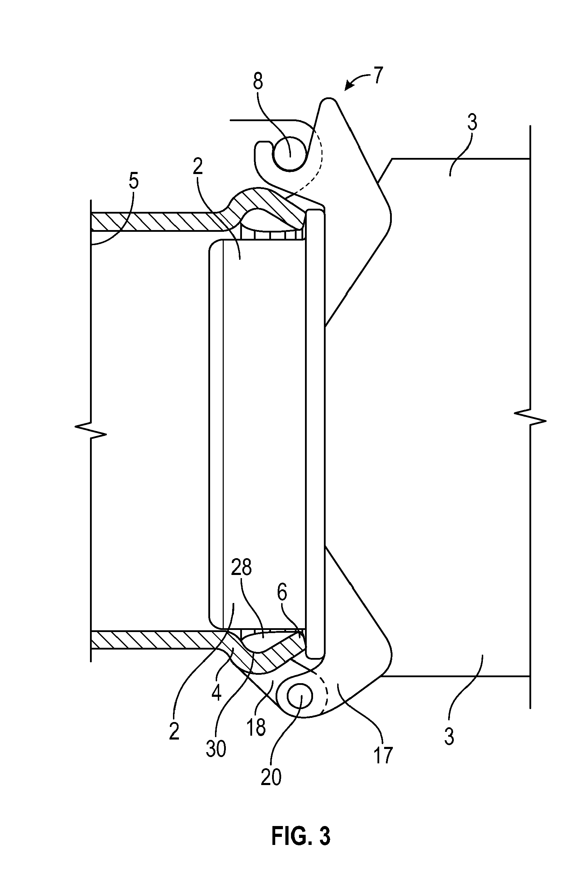

Fig. 3 shows a detailed drawing of the pipe joint when the two pipes are joined. It should be mentioned that the two longitudinal axes of the two pipes, the longitudinal axis of the first pipe: m, and the longitudinal axis of the second pipe: I, may be angled in relation to each other. This is due to the hinge coupling and the fastening allowing at one side a fluidtight joint and at the other side a small deflection between said two longitudinal axes. The angle may be between 0-10 degrees.

The joining of the two pipes takes place in the following way:
The first section 2 of the first pipe 3 and the second section 4 of the second pipe 6 are dimensioned in such a way that the inner diameter of the end 6 of the second section 4 is approximately equal to the outer diameter of the first section. The first section 2 is inserted into the second section 4 when the two pipes are coupled to each other.

The coupling takes place by the first pipe being suspended in a sling by a crane and placed in a sloped angle and moved downwards, whereby the first part 29 - the pintle - is caught by the attachment part 10 - the U-shaped curvature - placed at the first pipe 3.

Then, the second pipe 5 is moved into a substantially horizontal position by lowering the pipe. The movement is controlled by the hinge provided by the pintle 9 and the curvature 12 of the other pipe section. When the two pipes are coupled, they are joined by fastening means 11. As explained above, the fastening means may be an integral fish joint 16.

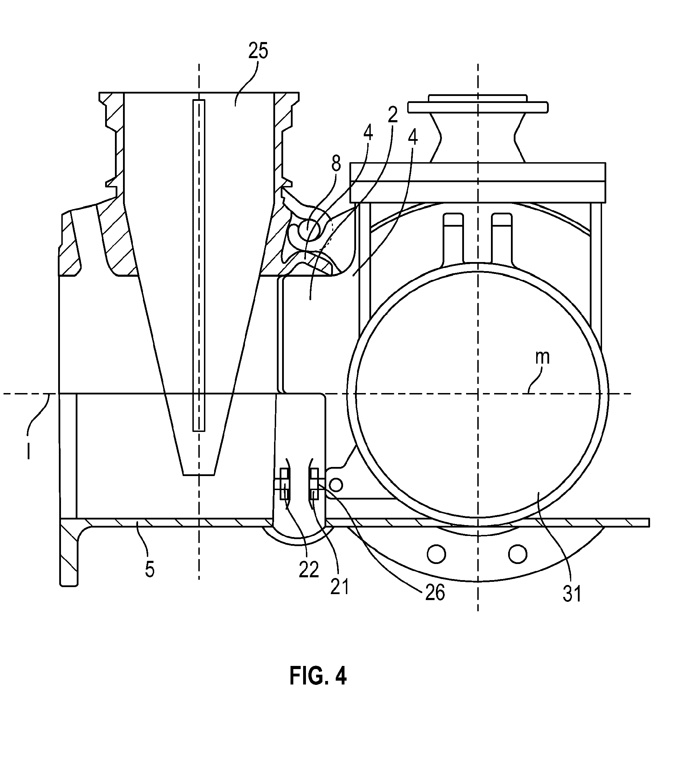

However, the pipe joint may also be provided by other fastening means. In Fig. 4, an alternative construction is shown.

The fastening means 11 comprises a number of parallelly oriented bolts or locking pins 26, each bolt/locking pin 26 being placed with the longitudinal axis being substantially axis-parallel with the longitudinal axis of the pipes and each bolt/locking pin being placed in a first and second bore. The first bore 21 is placed at the radially outer side of the first pipe 3, and the second bore 22 is placed at the outer surface of the second pipe 5. When the bolts/locking pins 26 are tightened, the two pipe sections 2, 4 are fastened to each other in a fluidtight manner. The locking pins/bolt 26 allow adjustment of the angular deflection and the length of the telescopic joint. The angular deflection is 0-10 degrees, ie + or - 5 degrees in relation to the longitudinal axis of the second pipe 5.

### List of references

- 1: pipe joint
- 2: first section
- 3: first pipe
- 4: second section
- 5: second pipe
- 6: end of second pipe
- 7: a pipe coupling
- 8: a hinge
- 9: pintle
- 10: attachment part
- 11: fastening means
- 12: hinged loop
- 13: opening
- 14:
- 15:
- 16: integral fish joint
- 17: first fishplate
- 18: second fishplate
- 19: through-going bore of fishplates
- 20: bolt/nut or locking pin for fishplates
- 21: first bore
- 22: second bore
- 23:
- 24:
- 25: gate valve
- 26: locking pin as fastening means
- 27:
- 28: seal
- 29: first part
- 30: recess
- 31: combi-cross pipe system

## Claims

1. A pipe joint (1) comprising a first section (2) of a first pipe (3) and a second section (4) of a second pipe (5), said second section (4) comprising an end (6) having an inner diameter approximately equal to the outer diameter of the first section (2), said first section (2) being inserted into the second section (4), and when the two pipes are coupled to each other, said pipe joint (1) comprises a pipe coupling (7) for coupling the two pipe sections (2, 4) to each other, **characterised in that** the pipe coupling (1) comprises a hinge (8) comprising a first part (29) placed at one pipe and an attachment part (10) placed at the other pipe, said pipe joint (1) further comprising fastening means (11) for fastening the two pipes (3, 5) to each other.

2. A pipe joint according to claim 1, **characterised in that** the first part (29) comprises a pintle (9).

3. A pipe joint according to claims 1-2, **characterised in that** the first part (29) is placed at the radial outer surface of the second pipe (5) at a second position and that the attachment part (10) is placed at the radial outer surface of the first pipe (3) at a first position, said first and second positions being level with each other when the two pipes (3, 5) are placed with their longitudinal axes being substantially coincident or angled in relation to each other up to 10 degrees when being in a position for joining the two pipes (3, 5).

4. A pipe joint according to claims 1-3, **characterised in that** the attachment part (10) comprises a hinged loop (12) comprising an opening (13), said opening (13) being adapted to receive the first part (29).

5. A pipe joint according to claims 1-4, **characterised in that** generally the attachment part (10) is a U-shaped hinge formed integrally with or by other means fixed to the first pipe (3), the radius of the U-shaped hinge being equal to or larger than the radius of the first part (29).

6. A pipe joint according to any of the preceding claims, **characterised in that** the longitudinal axis of the pintle (9) is placed perpendicularly in relation to the longitudinal axis of the second pipe (5).

7. A pipe joint according to any of the preceding claims, **characterised in that** the first part (29) is an integral part of the second pipe (5).

8. A pipe joint according to any of the claims 2-6, **characterised in that** the pintle (9) is a separate part being detachably attached to the second pipe (5) by placing a part of said pintle (9) in a bore provided in the second pipe (5), and **in that** the rest of the pintle (9) is adapted to be coupled together with the attachment part (10).

9. A pipe joint according to any of the preceding claims, **characterised in that** the fastening means (11) comprises a radial outwardly extending integral fish joint (16), said fish joint (16) comprising a first fishplate (17) placed at the first pipe (3) and a second fishplate (18) placed at the second pipe (5), said plates each comprising a through-going bore (19) and being connected by a bolt/nut or locking pin (20) inserted into said bores (19).

10. A pipe joint according to any of the preceding claims, **characterised in that** the fastening means (11) and the pipe coupling (7) are radially placed at opposite sides of the outside of the pipes (3, 5).

11. A pipe joint according to claims 1-8, **characterised in that** the fastening means (11) comprises a number of bolts/nuts or locking pins (26), each bolt/locking pin (26) being placed with the longitudinal axis substantially parallel with the longitudinal axis of the pipes and each bolt/locking pin being placed in a first (21) and second bore (22), said first bore (21) being placed at the radially outer side of the first pipe (3) and the second bore (22) being placed at the outer surface of the second pipe (5), said fastening means (11) fastening the two pipes (3, 5) together said fastening means allowing for angular deflection and an adjustment in the longitudinal direction..

12. Method for joining two pipes fluidtightly to each other by a pipe joint (1) comprising a first section (2) of a first pipe (3) and a second section (4) of a second pipe (5), said second section (4) comprising an end (6) having an inner diameter approximately equal to the outer diameter of the first section (2), said first section (2) being inserted into the second section (4), when the two pipes (3, 5) are coupled together, the pipe joint (1) further comprising a pipe coupling (7) for coupling the two pipe sections (2, 4) together, **characterised in that** the pipe coupling (7) comprises a hinge (8) comprising a first part (26) placed at one pipe,
said first pipe (3) being suspended and placed in a sloped angle and moved downwards, whereby the first part (29) is caught by an attachment part (10) placed at the other pipe,
said first pipe (3) being moved into a substantially horizontal position, said movement being controlled by the hinge (8),
and **in that** the pipe joint (1) further comprises fastening means (11) for fastening the two pipes together, said fastening means (11) being activated when the two pipe sections (2, 4) are in a prefixed position, whereby the two sections are fluidtightly joined.

13. Use of a pipe joint according to claims 1-11 for the method according to claim 12.

14. Use of a pipe joint according to claims 1-11 for joining the pipe of a gate valve (25) to a pipe of a combi-cross pipe system (31).
